# EUROPÄISCHE PATENTSCHRIFT

(11) **EP 2 726 281 B1**
(45) Veröffentlichungstag und Bekanntmachung des Hinweises auf die Patenterteilung: **20.05.2015**
(21) Anmeldenummer: 12723491.2
(22) Anmeldetag: 24.05.2012
(51) Int. Cl.: B32B 13/10, B32B 21/02, B27N 3/02, B27N 3/04, B27N 3/06, B27N 3/14

(54) **SANDWICHPLATTE, INSBESONDERE FÜR EIN MÖBEL, SOWIE HERSTELLUNGSVERFAHREN**
SANDWICH PANEL, IN PARTICULAR FOR A PIECE OF FURNITURE, AND PRODUCTION METHOD
PANNEAU SANDWICH, NOTAMMENT POUR UN MEUBLE, AINSI QUE PROCÉDÉ DE FABRICATION

(30) Priorität: 01.07.2011 DE 102011107830
(43) Veröffentlichungstag der Anmeldung: 07.05.2014
(73) Patentinhaber: Fritz Egger GmbH & Co. OG, 3105 Unterradlberg (AT)
(72) Erfinder: RIEPERTINGER, Manfred, 83093 Bad Endorf (DE); SCHELLER, Michael, 59929 Brilon (DE)
(74) Vertreter: Cohausz & Florack
(86) Internationale Anmeldenummer: PCT/EP2012/059732
(87) Internationale Veröffentlichungsnummer: WO 2013/004433

(56) Entgegenhaltungen:
- EP-A1- 1 184 525
- WO-A1-2005/046950
- WO-A1-2009/050565
- US-A- 4 148 857
- US-A- 4 236 365
- DATABASE WPI Week 199543 Thomson Scientific, London, GB; AN 1995-331872 XP002678666, & JP 7 227814 A (DAIKEN KOGYO KK) 29. August 1995 (1995-08-29)

## Beschreibung

Die Erfindung betrifft eine Sandwichplatte für ein Möbel, mit einer sich in eine Längsrichtung ersteckenden Holzwerkstoffplatte aus mit einem Bindemittel versehenen und miteinander verpressten Holzpartikeln, die eine in Längsrichtung verlaufende Oberseite und eine dazu parallele Unterseite aufweist, wobei der Abstand zwischen Oberseite und Unterseite eine Plattendicke definiert, und mit einer sich in Längsrichtung erstreckenden ersten Decklage entsprechend Anspruch 1, die mit der Oberseite der Holzwerkstoffplatte verleimt ist und die eine Dicke hat, die kleiner als die Plattendicke der Holzwerkstoffplatte ist.

Ferner betrifft die Erfindung ein Verfahren zur Herstellung einer Sandwichplatte, bei dem eine sich in eine Längsrichtung erstreckende Holzwerkstoffplatte hergestellt wird, indem Holzpartikel mit einem Bindemittel versehen und zu einem Spänekuchen gestreut werden, der unter erhöhtem Druck und erhöhter Temperatur in einer Presseinrichtung verpresst wird, wobei die Holzwerkstoffplatte durch das Verpressen eine in Längsrichtung verlaufende Oberseite und eine dazu parallele Unterseite erhält, wobei der Abstand zwischen Oberseite und Unterseite eine Plattendicke definiert.

Aus dem Stand der Technik sind für den Möbelbau verschiedene einlagige oder mehrlagige Platten unter Verwendung eines Holzwerkstoffes bekannt. Einlagig bedeutet, dass diese aus einer oder mehreren Schichten von gestreuten und mit einem Bindemittel versehenen Holzpartikeln besteht, die zu einer Holzwerkstoffplatte verpreßt sind. Mehrlagig bedeutet demgegenüber, dass nach dem Verpressen des ein- oder mehrschichtigen Spänekuchens die daraus resultierende Holzwerkstoffplatte noch mit einem weiteren Bauteil, nämlich einer separaten Decklage, verklebt wird, was üblicherweise in einer weiteren Presse durchgeführt wird. Sowohl einlagige wie mehrlagige Platten werden für die Verwendung im Möbelbau mit einer Beschichtung versehen, beispielsweise mit einem Laminat, einem Schichtstoff, einem Furnier oder sie werden lackiert und/oder direkt mit einem Dekor bedruckt.

Die einlagige Holzwerkstoffplatte einerseits oder die mehrlagige Sandwichplatte andererseits können in einem Möbel, beispielsweise in einem Schrank oder Regal, als Seitenteil eingesetzt werden, an welchem später Böden oder Türen befestigt werden. Das Befestigen von Böden oder Türen erfolgt beispielsweise unter Verwendung von Dübeln und/oder Schrauben, die im Material der Platte verankert werden.

Eine wie zuvor beschriebene Platte kann auch als Tischplatte oder Arbeitsplatte, insbesondere Küchenarbeitsplatte, verwendet werden, wobei auch in diesem Fall andere Bauteile des Möbels mit der Platte mechanisch, beispielsweise durch Schrauben, verbunden werden. Im Falle einer Küchenarbeitsplatte ist es auch bekannt, ein Spülbecken mit Hilfe von Schrauben und/oder Klemmen mit dem Rand einer in der Platte vorgesehenen Aussparung zu verbinden.

Die im Möbelbau eingesetzten plattenförmigen Holzwerkstoffe sind üblicherweise Span- oder Faserplatten. Auch kommen sogenannte Leichtbauplatten zum Einsatz, die eine leichte Mittellage, beispielsweise aus einer leichten Holzart, einer Wabenkonstruktion, einer leichten Holzwerkstoffplatte oder einem geschäumten Material aufweisen, die beidseitig von Holzwerkstoffplatten als Decklagen gesäumt ist.

Die Anforderungen an die genannten Plattentypen (Spanplatte, Faserplatte, Leichtbauplatte) sind neben der Maßgenauigkeit ganz wesentlich auch eine gute Beschichtbarkeit sowie verschiedene mechanische Eigenschaften. Weiterhin ist ein verringertes Gewicht zur leichteren Handhabbarkeit der Platte und des späteren Möbels erwünscht, wobei ein verringertes Gewicht gleichzeitig auch Ressourcen einspart.

Die zuvor genannten Anforderungen, insbesondere eine gute Beschichtbarkeit und gute mechanische Eigenschaften einerseits und ein geringes Gewicht andererseits, stehen sich bei den heute gebräuchlichen Holzwerkstoffen entgegen. Ein geringes Gewicht bedeutet bei Span- und Faserplatten auch verminderte mechanische Eigenschaften sowie eine schlechtere Beschichtbarkeit. Bei Spanplatten sind daher gegenwärtig Rohdichten, im Folgenden nur kurz Dichten genannt, von zumindest 600 kg/m3, bei Faserplatten von zumindest 800 kg/m3 üblich. Dies ist insbesondere deshalb unbefriedigend, weil diese relativ hohen Werte für die Dichte nicht über die gesamte Fläche der späteren Möbelplatte benötigt werden, sondern in der Regel nur im Bereich von Kanten bzw. an den Positionen, an denen Beschläge wie Scharniere, Dübel, Schrauben oder Fächerträger montiert werden. Hinsichtlich der Beschichtbarkeit können über die Plattendicke hinweg Dichteverläufe so eingestellt werden, dass in oberflächennahen Bereichen eine ausreichend hohe Dichte vorliegt, um die erforderliche Beschichtbarkeit zu gewährleisten.

Gegenüber Span- und Faserplatten stellen Leichtbauplatten einen anderen Lösungsansatz dar. Durch eine Leichtbauplatte wird ein plattenförmiges Bauteil zur Verfügung gestellt, das einerseits leicht, andererseits aber auch gut beschichtbar und ausreichend stabil ist. Bei den heute bekannten Leichtbauplatten ist allerdings unbefriedigend, dass für die Montage von Beschlägen zumeist nicht auf herkömmliche Systeme zurückgegriffen werden kann, da diese in der leichten Mittellage, gerade wenn es sich dabei um eine Wabenkonstruktion oder ein geschäumtes Material handelt, keinen ausreichenden Halt finden. Daher müssen bei Leichtbauplatten, die im Möbelbau eingesetzt werden, häufig verschiedene Einsätze, sogenannte Inserts, oder Riegelkonstruktionen eingesetzt werden. Darüber hinaus haben Leichtbauplatten erst ab einer Dicke von 20 mm einen entscheidenden Vorteil gegenüber dünneren Ausführungen, da erst dann aufgrund der Ressourceneinsparung der Preis gegenüber Vollplatten attraktiver ist. Auch ist erst bei einer Dicke von mindestens 20 mm ein nennenswerter Unterschied im Plattengewicht zwischen einer Leichtbauplatte und einer Vollplatte vorhanden. Im Möbelbau werden jedoch vorwiegend Plattenmaterialien mit einer Stärke von weniger als 20 mm eingesetzt, so dass überwiegend vergleichsweise schwere Vollplatten zum Einsatz kommen.

Ein anderer Lösungsansatz nach dem Stand der Technik besteht darin, eine einlagige Holzwerkstoffplatte als Vollplatte zu verwenden, die über ihre Fläche hinweg, d.h. in Richtung ihrer Haupterstreckungsebene (in Längsrichtung), eine variierende Dichte aufweist. Eine solche einlagige Vollplatte ist beispielsweise aus der WO 2005/046950 A1 bekannt. Abschnitte, die später eine höhere Dichte bzw. eine höhere mechanische Festigkeit aufweisen sollen, werden durch gezielte erhöhte Bereitstellung von beleimten Holzpartikeln vor dem Verpressen erzeugt. Dazu wird zunächst eine untere Deckschicht aus relativ feinen Spänen gestreut. Auf die untere Deckschicht wird, noch vor dem Verpressen, eine Mittelschicht aus gröberen Spänen gestreut, wobei hier partiell größere Mengen von Spänen verwendet werden, um in diesen Bereichen später eine höhere Dichte zu erhalten. Auf die Mittelschicht wird anschließend eine Deckschicht aus feineren Spänen aufgestreut. Der aus diesen drei Schichten bestehende Spänekuchen wird dann erst einer Presse zugeführt, wodurch sich nach dem Pressvorgang eine einlagige Holzwerkstoffplatte ergibt, die in Abschnitten der Mittelschicht eine erhöhte Dichte aufweist. Die Deckschichten dieser Vollplatte weisen dagegen keine Dichteunterschiede auf.

Aus der WO 2007/031166 A1 ist eine Sandwichplatte bekannt, bei der die Mittellage aus einer leichten Span- oder Faserplatte besteht, die beidseitig von Deckplatten gesäumt ist, die nachträglich mit der Mittellage verklebt worden sind. Die Deckplatten werden von einer Holzwerkstoffplatte gebildet. Alternativ kann auch eine Beschichtung der Mittellage mit einem Kraftliner, einem Papier, einem Karton, einem Furnier oder einem Schichtstoff, nämlich HPL (High Pressure Laminate, hochverdichteter Schichtstoff) oder CPL (Continuous Pressure Laminate, kontinuierlich verdichteter Schichtstoff), erfolgen. Die Mittellage hat dabei eine gleichmäßige Dichte von weniger als 500 kg/m3, wohingegen die Deckplatten eine gleichmäßige Dichte von mehr als 500 kg/m3 haben.

Ausgehend von dem zuvor beschriebenen Stand der Technik ist es eine Aufgabe der vorliegenden Erfindung, eine Sandwichplatte zu schaffen, die für den Möbelbau optimiert ist. Auch ist es eine Aufgabe, ein entsprechendes Herstellungsverfahren anzugeben.

Die zuvor hergeleitete und aufgezeigte Aufgabe wird gemäß einer ersten Lehre der vorliegenden Erfindung bei einer Sandwichplatte für ein Möbel, mit einer sich in eine Längsrichtung ersteckenden Holzwerkstoffplatte aus mit einem Bindemittel versehenen und miteinander verpressten Holzpartikeln, die eine in Längsrichtung verlaufende Oberseite und eine dazu parallele Unterseite aufweist, wobei der Abstand zwischen Oberseite und Unterseite eine Plattendicke definiert und mit einer sich in Längsrichtung erstreckenden ersten Decklage, die mit der Oberseite der Holzwerkstoffplatte verleimt ist und die eine Dicke hat, die kleiner als die Plattendicke der Holzwerkstoffplatte ist, dadurch gelöst, dass die Holzwerkstoffplatte mindestens einen ersten Abschnitt aufweist, in welchem die Dichte der Holzwerkstoffplatte höher als in mindestens einem in Längsrichtung dazu benachbarten zweiten Abschnitt der Holzwerkstoffplatte ist, und die erste Decklage gemäß Anspruch 1 ausgestaltet ist.

Mit der Längsrichtung ist die Verlaufsrichtung der Hauptertreckungsebene bzw. Längsmittelebene der Platte gemeint.

Eine solche Sandwichplatte kann insbesondere als Seitenteil eines Möbels, beispielsweise eines Schranks oder eines Regals, oder als Tisch- oder Arbeitsplatte, insbesondere Küchenarbeitsplatte, eingesetzt werden. Dementsprechend beansprucht die Erfindung auch ein entsprechendes Möbel mit einer solchen Sandwichplatte.

Indem die Sandwichplatte eine Holzwerkstoffplatte mit einer über ihre Fläche bzw. Haupterstreckungsebene variierenden Dichte aufweist, können in den Abschnitten einer höheren Dichte, d.h. in dem mindestens einen ersten Abschnitt, Beschläge wie Scharniere, Dübel, Schrauben oder Fächerträger, in optimaler Weise montiert werden. Das Risiko eines Ausreißens der Beschläge aus dem Material der Holzwerkstoffplatte ist dadurch minimiert. Erfindungsgemäß wird das Risiko eines Ausreißens dadurch weiter verringert und die Stabilität der Sandwichplatte dadurch erhöht, dass die Holzwerkstoffplatte zumindest oberseitig, insbesondere auf der Seite, auf der der Beschlag angeordnet wird, und gegebenenfalls auch unterseitig mit einer plattenförmigen Decklage, einer sogenannten Deckplatte, gesäumt ist. Eine Deckplatte ist im Unterschied zu einer Beschichtung, beispielsweise einem Furnier, einem Schichtstoff wie HPL oder CPL, einem Lack oder einer Folie, deutlich steifer und insbesondere auch dicker, bietet also zusätzlichen Halt für den jeweiligen Beschlag. Die Stabilität lässt sich noch weiter erhöhen, wenn in dem mindestens einen ersten Abschnitt mit der höheren Dichte die Dichte der Holzwerkstoffplatte in einer bis an die oberseitige und/oder unterseitige Oberfläche, d.h. bis an die Oberseite und/oder Unterseite, der Holzwerkstoffplatte reichenden Zone höher als in dem mindestens einen in Längsrichtung dazu benachbarten zweiten Abschnitt der Holzwerkstoffplatte ist.

Gleichzeitig hat die Holzwerkstoffplatte insgesamt ein deutlich geringeres Gewicht gegenüber vergleichbaren Vollplatten aus dem Stand der Technik, da hier die mechanisch nicht beanspruchten Abschnitte, d.h. die zu dem ersten Abschnitt einer höheren Dichte benachbarten Abschnitte, eine relativ geringe Dichte aufweisen. Auf diese Weise wird das durchschnittliche Gewicht und die durchschnittliche Dichte der Holzwerkstoffplatte und damit der gesamten Sandwichplatte erheblich reduziert. Die durchschnittliche Dichte der Holzwerkstoffplatte kann dadurch unter 550 kg/m3, bevorzugt unter 450 kg/m3 und besonders bevorzugt unter 400 kg/m3, liegen. Es ist sogar eine durchschnittliche Dichte von weniger 350 kg/m3 denkbar. Dennoch ist die Sandwichplatte optimal zur Aufnahme von Beschlägen geeignet.

Die Holzwerkstoffplatte ist zumindest einseitig, nämlich auf ihrer Oberseite, von einer ersten Decklage gesäumt, wodurch das Material und die Oberflächenbeschaffenheit der Decklage speziell auf eine optimale Beschichtbarkeit abgestimmt werden kann. Die Sandwichplatte bildet dadurch ein plattenförmiges Element, welches in mechanisch beanspruchten Abschnitten eine relativ hohe Stabilität aufweist, welches ein geringes Gewicht hat und welches optimal beschichtet werden kann, beispielsweise durch Auftragen einer Lackierung.

Die gesamte Holzwerkstoffplatte hat eine konstante Dicke. Entsprechendes gilt auch für die jeweils mit der Holzwerkstoffplatte verbundene(n) Decklage(n).

Gemäß noch einer Ausgestaltung der erfindungsgemäßen Sandwichplatte ist in dem mindestens einen ersten Abschnitt mit der höheren Dichte eine über die Plattendicke gleichmäßige Dichte der Holzwerkstoffplatte vorgesehen. Mit anderen Worten liegt hier ein gleichmäßiges Dichteprofil vor, d.h. die Holzwerkstoffplatte hat in den Abschnitten höherer Dichte in der Plattenmitte dieselbe Dichte wie außen. Alternativ ist es aber auch denkbar, dass in dem mindestens einen ersten Abschnitt mit der höheren Dichte eine über die Plattendicke variierende Dichte vorgesehen ist, wobei der Dichteverlauf im ersten Abschnitt symmetrisch zu einer Mittelebene ist, die in Längsrichtung in der Mitte zwischen Oberseite und Unterseite der Holzwerkstoffplatte verläuft. Mit einem zu einer Mittelebene symmetrischen Dichteverlauf ist ein über die Plattendicke symmetrischer Dichteverlauf gemeint. In diesem Fall steigt die Dichte insbesondere von der Mitte der Holzwerkstoffplatte nach außen hin an. Dabei kann der Dichteverlauf auf den späteren Anwendungsfall abgestimmt sein; wenn also der Beschlag relativ schwer ist und beispielsweise Schrauben oder Dübel bis in die Mitte der Holzwerkstoffplatte ragen werden, kann in dieser Zone in der Mitte der Holzwerkstoffplatte ebenfalls eine relativ hohe Dichte im Vergleich zu in Längsrichtung benachbarten Abschnitten vorgesehen sein. Sollen die Beschläge lediglich oberflächennah montiert werden, werden also die Schrauben oder Dübel nicht bis in die Mitte der Holzwerkstoffplatte ragen, kann in der mittleren Zone der Holzwerkstoffplatte auch eine relativ geringe Dichte vorgesehen sein, was zusätzliches Gewicht spart. Wesentlich ist aber, dass die Abschnitte höherer Dichte bis zur Oberfläche der Holzwerkstoffplatte, d.h. bis zur Oberseite und/oder Unterseite, reichen.

Gemäß einer weiteren Ausgestaltung der erfindungsgemäßen Sandwichplatte hat der mindestens eine erste Abschnitt mit der höheren Dichte einen streifenförmigen Verlauf. Streifenförmig bedeutet, dass der Abschnitt eine größere Länge als Breite hat. Der Streifen kann zumindest teilweise gerade oder gebogen sein. Ein streifenförmiger Verlauf eignet sich besonders in dem Fall, dass eine erhöhte Dichte im Randbereich der Sandwichplatte vorgesehen sein soll. Dabei kann sich der mindestens eine erste Abschnitt mit der höheren Dichte parallel, quer oder winkelig zur Längsrichtung erstrecken.

Gemäß noch einer Ausgestaltung der erfindungsgemäßen Sandwichplatte kann vorgesehen sein, dass mehrere der ersten Abschnitte mit der höheren Dichte einander berühren.

Zusätzlich oder alternativ ist es denkbar, dass sich der mindestens eine erste Abschnitt mit der höheren Dichte bis zu einer Stirnkante der Holzwerkstoffplatte erstreckt, wobei die Stirnkante die äußere Begrenzung der Holzwerkstoffplatte oder die äußere Begrenzung einer Aussparung in der Holzwerkstoffplatte bildet. Dabei erstreckt sich der mindestens eine erste Abschnitt mit der höheren Dichte, insbesondere wenn es sich dabei um ein streifenförmigen Verlauf handelt, vorzugsweise über die gesamte Länge der Stirnkante. Dabei kann jede die äußere Begrenzung der Holzwerkstoffplatte bildende Stirnkante und/oder jede die äußere Begrenzung der Aussparung bildende Stirnkante an einen der ersten Abschnitte mit der höheren Dichte angrenzen. Mit anderen Worten verlaufen der oder die ersten Abschnitte mit der höheren Dichte entlang der gesamten äußeren Begrenzung der Holzwerkstoffplatte und/oder der Aussparung.

Beispielsweise kann in dem Fall, dass die Stirnkante die äußere Begrenzung der Holzwerkstoffplatte bildet, an jeder Stirnkante der Holzwerkstoffplatte ein insbesondere streifenförmiger Abschnitt einer erhöhten Dichte vorgesehen sein, wobei die einzelnen Abschnitte sich im Bereich der jeweiligen Ecke der Holzwerkstoffplatte berühren, d.h. ineinander übergehen. Auf diese Weise lässt sich eine Holzwerkstoffplatte mit einem umlaufenden rahmenförmigen Gebilde einer erhöhten Dichte schaffen. Eine Sandwichplatte mit einer solchen Holzwerkstoffplatte kann optimal als Seitenteil eines Möbels verwendet werden, da bei einem solchen Seitenteil in der Regel im Randbereich Dübel oder Schrauben eingesetzt werden. Eine solche Platte kann auch die Tür eines Möbels bilden, bei der im Randbereich Scharniere montiert werden.

In dem Fall, dass die Stirnkante die äußere Begrenzung einer Aussparung in der Holzwerkstoffplatte bildet, kann dadurch beispielsweise auch der Bereich einer Arbeitsplatte, beispielsweise Küchenarbeitsplatte, verstärkt werden, in welchem ein Spülbecken oder dergleichen in die Aussparung eingesetzt und mit dem Randbereich der Sandwichplatte verbunden wird.

Gemäß wiederum einer weiteren Ausgestaltung der erfindungsgemäßen Sandwichplatte ist eine sich in Längsrichtung erstreckende zweite Decklage vorgesehen. Diese erstreckt sich parallel zur ersten Decklage und ist mit der Unterseite der Holzwerkstoffplatte verklebt.

Grundsätzlich kann die erste Decklage und/oder die zweite Decklage eine Dichte von mindestens 600 kg/m3, bevorzugt von mindestens 700 kg/m3, besonders bevorzugt von mindestens 750 kg/m3, aufweisen, wodurch diese besonders gut beschichtbar ist.

Gemäß noch einer Ausgestaltung der erfindungsgemäßen Sandwichplatte ist die erste und gegebenenfalls die zweite Decklage eine Dünnspanplatte, eine Dünn-MDF-Platte oder eine Sperrholzplatte. Bei Dünnspanplatten handelt es sich im Sinne der vorliegenden Erfindung um Spanplatten mit einer maximalen Stärke (Dicke) von 8 mm. Bei Dünn-MDF-Platten handelt es sich im Sinne der vorliegenden Erfindung um MDF-Platten (MDF: mitteldichte Faserplatte) mit einer maximalen Stärke von 8 mm. Eine solche Decklage lässt sich besonders gut lackieren. Die Dicke der ersten und/oder zweiten Decklage beträgt insbesondere höchstens 5 mm, bevorzugt höchstens 3,5 mm und liegt besonders bevorzugt in einem Bereich von 1,5 bis 3 mm.

Bevorzugt ist die jeweilige plattenförmige Decklage bzw. Deckplatte mit einem Furnier, einem Laminat in Form eines beharzten Dekorpapiers, einem Schichtstoff, insbesondere HPL oder CPL, einem Lack oder einer Folie beschichtet. Die Deckplatte kann auch direkt mit einem Dekor bedruckt sein, das die Beschichtung bildet.

Gemäß einer weiteren Ausgestaltung der erfindungsgemäßen Sandwichplatte ist die Holzwerkstoffplatte eine Spanplatte oder eine Faserplatte und besteht insbesondere überwiegend oder vollständig aus Nadelholz. Die Holzwerkstoffplatte hat insbesondere eine Dicke von höchstens 200 mm. Die Dicke liegt bevorzugt in einem Bereich von 8 bis 22 mm und besonders bevorzugt in einem Bereich von 12 bis 19 mm.

Die Aufgabe wird ferner gemäß einer weiteren Lehre der vorliegenden Erfindung bei einem Verfahren zur Herstellung einer eine Holzwerkstoffplatte und mindestens eine damit verbundene Decklage aufweisenden Sandwichplatte, insbesondere einer wie zuvor definierten Sandwichplatte, bei dem eine sich in eine Längsrichtung erstreckende Holzwerkstoffplatte hergestellt wird, indem Holzpartikel mit einem Bindemittel versehen und zu einem Spänekuchen gestreut werden, der unter erhöhtem Druck und erhöhter Temperatur in einer Presseinrichtung verpresst wird, wobei die Holzwerkstoffplatte durch das Verpressen eine in Längsrichtung verlaufende Oberseite und eine dazu parallele Unterseite erhält, wobei der Abstand zwischen Oberseite und Unterseite eine Plattendicke definiert, dadurch gelöst, dass bei der Herstellung der Holzwerkstoffplatte mindestens ein erster Abschnitt erzeugt wird, in welchem nach dem Verpressen die Dichte der Holzwerkstoffplatte höher als in mindestens einem in Längsrichtung dazu benachbarten zweiten Abschnitt der Holzwerkstoffplatte ist, wobei die Decklage entsprechend Anspruch 14 ausgestaltet ist. Bevorzugt wird der mindestens eine erste Abschnitt so erzeugt, dass nach dem Verpressen die Dichte der Holzwerkstoffplatte in einer bis an die oberseitige und/oder unterseitige Oberfläche, d.h. die Oberseite und/oder Unterseite, der Holzwerkstoffplatte reichenden Zone höher als in dem mindestens einen in Längsrichtung dazu benachbarten zweiten Abschnitt der Holzwerkstoffplatte ist.

Bei dem erfindungsgemäßen Verfahren wird also zunächst eine Vollplatte hergestellt, die in verschiedenen Abschnitten eine unterschiedliche Dichte hat. Die verschiedenen Abschnitte liegen dabei in Verlaufsrichtung der Erstreckungsebene der Holzwerkstoffplatte nebeneinander. Dabei kann die Vollplatte nach dem Verpressen bereits die Holzwerkstoffplatte bilden, die mit der oder den Decklagen zu einer Sandwichplatte zusammengefügt wird. Es ist aber auch denkbar, dass die durch das Verpressen erhaltene Vollplatte noch zerteilt wird, also ein Zwischenprodukt bildet, wobei dann die durch das Zerteilen entstehenden Einzelplatten die erfindungsgemäß in der Sandwichplatte verwendete Holzwerkstoffplatte bilden.

Gemäß einer Ausgestaltung des Verfahrens wird der mindestens eine erste Abschnitt mit der höheren Dichte erzeugt, indem der Spänekuchen vor dem Verpressen in dem Bereich, der später, d.h. nach dem Verpressen, den mindestens einen ersten Abschnitt bildet, mit einer größeren Dicke geformt bzw. gestreut wird. Dabei kann die größere Dicke des Spänekuchens erreicht werden, indem eine erste bzw. untere Schicht aus Holzpartikeln in dem Bereich, der später den mindestens einen ersten Abschnitt bildet, mit einer zweiten Schicht aus Holzpartikeln überstreut wird. Mit anderen Worten erfolgt ein mehrmaliges Streuen. Alternativ ist es aber auch denkbar, dass die größere Dicke des Spänekuchens erreicht wird, indem in dem Bereich, der später den mindestens einen ersten Abschnitt bildet, eine größere Menge an Holzpartikeln als in mindestens einem dazu benachbarten Bereich derselben Schicht ausgestreut wird. In diesem Fall erfolgt also nur ein einmaliges Streuen.

Gemäß noch einer Ausgestaltung des erfindungsgemäßen Verfahrens ist vorgesehen, dass der mindestens eine erste Abschnitt mit der höheren Dichte erzeugt wird, indem vor dem Verpressen in dem Bereich, der später den mindestens einen ersten Abschnitt bildet, eine größere Menge Bindemittel pro Kilogramm bzw. pro Masseneinheit Holzpartikel als in mindestens einem benachbarten Bereich verwendet wird.

Grundsätzlich ist es auch denkbar, die Dichte der Holzwerkstoffplatte in dem jeweiligen ersten Abschnitt dadurch gegenüber einem dazu benachbarten zweiten Abschnitt zu erhöhen, dass im ersten Abschnitt ein anderes Bindemittel und/oder eine andere Art von Holzpartikeln als im benachbarten zweiten Abschnitt vorgesehen ist. Zusätzlich oder alternativ können die Holzpartikel im ersten Abschnitt auch aus einem anderen Material als im zweiten Abschnitt bestehen oder eine andere Größe als im zweiten Abschnitt haben.

Gemäß wiederum einer weiteren Ausgestaltung des erfindungsgemäßen Verfahrens wird, wie bereits erwähnt, durch das Verpressen des Spänekuchens ein plattenförmiges Zwischenprodukt erzeugt, aus dem die Holzwerkstoffplatte durch Abtrennen eines Teils erhalten wird. Das Zwischenprodukt wird also zerteilt, insbesondere zersägt, wobei die dadurch entstehenden Einzelplatten die Holzwerkstoffplatte bilden, die mit der mindestens einen Decklage versehen wird.

Ferner ist gemäß noch einer weiteren Ausgestaltung des erfindungsgemäßen Verfahrens vorgesehen, dass eine sich in Längsrichtung erstreckende Decklage mit der Oberseite und/oder Unterseite des verpressten Spänekuchens bzw. der Oberseite und/oder Unterseite der Holzwerkstoffplatte verklebt wird, wobei die Decklage eine Dicke hat, die kleiner als die Plattendicke der Holzwerkstoffplatte ist. Mit anderen Worten kann die jeweilige Decklage bereits auf das Zwischenprodukt vor dem Zerteilen aufgebracht werden, oder aber erst später auf die durch Zerteilen erhaltene Holzwerkstoffplatte. In dem Fall, dass die Holzwerkstoffplatte unmittelbar durch das Verpressen erzeugt wird, also kein Zwischenprodukt erhalten wird, das später noch zerteilt wird, wird die jeweilige Decklage dann unmittelbar auf die Holzwerkstoffplatte aufgelegt und mit dieser verklebt.

Schließlich ist gemäß noch einer Ausgestaltung des erfindungsgemäßen Verfahrens vorgesehen, dass die mindestens eine mit der Holzwerkstoffplatte verbundene Decklage mit einer Beschichtung versehen wird, wobei die Beschichtung insbesondere vor dem Verkleben oder nach dem Verkleben der jeweiligen Decklage mit der Holwerkstoffplatte erfolgt. Bevorzugt wird die jeweilige plattenförmige Decklage bzw. Deckplatte mit einem Furnier, einem Laminat in Form eines beharzten Dekorpapiers, einem Schichtstoff, insbesondere HPL oder CPL, einem Lack oder einer Folie beschichtet. Die Deckplatte kann auch direkt mit einem Dekor bedruckt werden.

Abschließend sei darauf hingewiesen, dass der jeweilige erste Abschnitt zusätzlich oder alternativ zum Vorsehen einer gegenüber einem benachbarten Abschnitt erhöhten Dichte auch durch eine in diesem Abschnitt verlaufende Armierung gekennzeichnet sein kann, wobei dann der jeweils benachbarte zweite Abschnitt keine Armierung aufweist. In diesem Fall kann eine Sandwichplatte, insbesondere für ein Möbel, mit einer sich in eine Längsrichtung ersteckenden Holzwerkstoffplatte aus mit einem Bindemittel versehenen und miteinander verpressten Holzpartikeln, die eine in Längsrichtung verlaufende Oberseite und eine dazu parallele Unterseite aufweist, wobei der Abstand zwischen Oberseite und Unterseite eine Plattendicke definiert, und mit einer sich in Längsrichtung erstreckenden ersten Decklage, die mit der Oberseite der Holzwerkstoffplatte verklebt ist und die eine Dicke hat, die kleiner als die Plattendicke der Holzwerkstoffplatte ist, auch dadurch gekennzeichnet sein, dass die Holzwerkstoffplatte mindestens einen ersten Abschnitt aufweist, in welchem eine Armierung vorgesehen ist, wohingegen in mindestens einem in Längsrichtung dazu benachbarten zweiten Abschnitt der Holzwerkstoffplatte keine Armierung vorgesehen ist. Es ist auch denkbar, dass die Holzwerkstoffplatte mindestens einen ersten Abschnitt aufweist, in welchem ein höherer Anteil an Armierung der Holzwerkstoffplatte als in mindestens einem in Längsrichtung dazu benachbarten zweiten Abschnitt der Holzwerkstoffplatte vorgesehen ist, die Armierung im ersten Abschnitt also stärker als die Armierung im zweiten Abschnitt ist.

Es gibt nun eine Vielzahl von Möglichkeiten, die erfindungsgemäße Sandwichplatte, das erfindungsgemäße Möbel und das erfindungsgemäße Verfahren auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigt:
Fig. 1a eine schematische Darstellung eines ersten Ausführungsbeispiels des erfindungsgemäßen Verfahrens,
Fig. 1b eine schematische Darstellung eines zweiten Ausführungsbeispiels des erfindungsgemäßen Verfahrens,
Fig. 2 ein Zwischenprodukt und eine daraus hergestellte Holzwerkstoffplatte für eine erfindungsgemäße Sandwichplatte,
Fig. 3 eine beispielhafte Darstellung verschiedener Ausführungsbeispiele von höher verdichteten Abschnitten einer Holzwerkstoffplatte für eine erfindungsgemäße Sandwichplatte und
Fig. 4 ein Ausführungsbeispiel einer Küchenarbeitsplatte mit einer Aussparung.

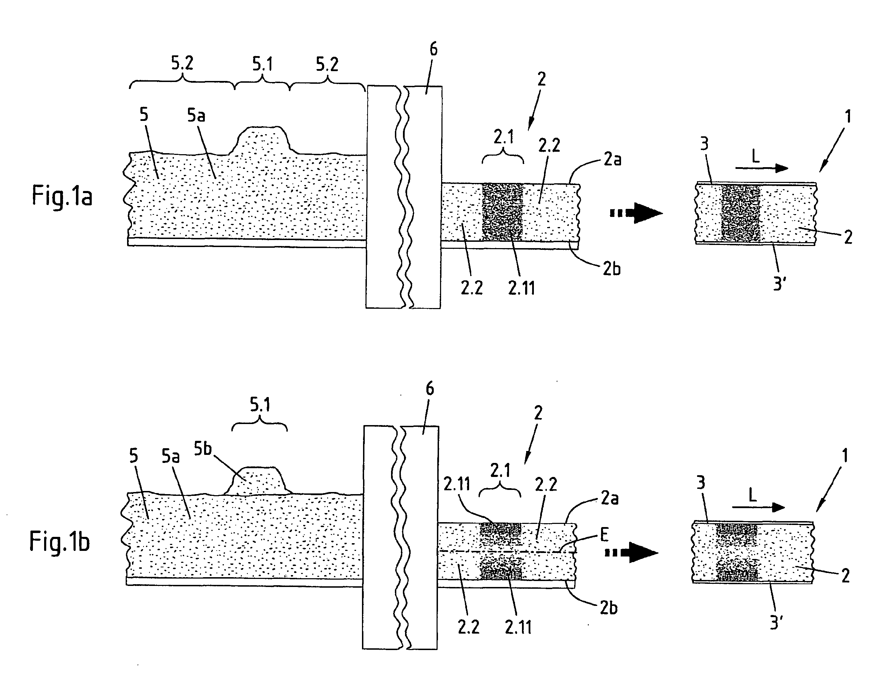

In Fig. 1 ist ein Verfahren zur Herstellung einer Sandwichplatte 1 dargestellt, die nach ihrer Fertigstellung aus einer Holzwerkstoffplatte 2 und einer oberen Decklage 3 sowie einer unteren Decklage 3' aufgebaut ist. Die Sandwichplatte 1 kann ein Teil eines Möbels bilden, insbesondere ein Seitenteil eines Schranks oder Regals, oder eine Tisch- oder Arbeitsplatte.

Bei dem in Fig. 1a dargestellten Verfahren wird eine sich in eine Haupterstreckungsebene bzw. Längsrichtung L erstreckende Holzwerkstoffplatte 2 dadurch hergestellt, dass Holzpartikel mit einem Bindemittel versehen und zu einem Spänekuchen 5 gestreut werden, der unter erhöhtem Druck und erhöhter Temperatur, d.h. einem Druck oberhalb des Umgebungsdrucks und einer Temperatur oberhalb der Umgebungstemperatur, in einer Presseinrichtung 6 verpresst wird. Die Holzwerkstoffplatte 2 erhält dadurch eine Oberseite 2a und eine dazu parallele Unterseite 2b, die überall den gleichen Abstand voneinander haben.

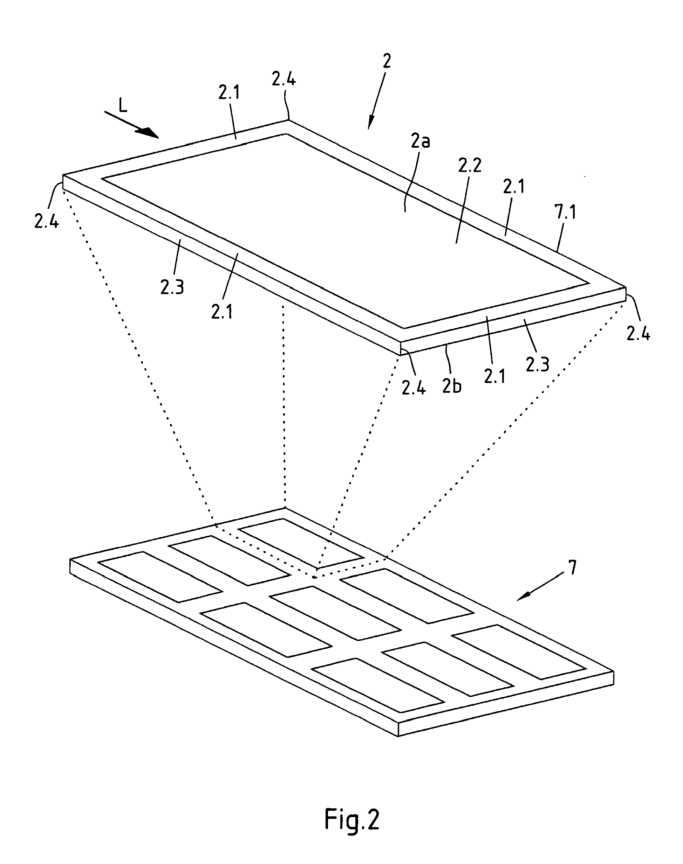

Bei der Herstellung der Holzwerkstoffplatte 2 werden erste Abschnitte 2.1 erzeugt, in denen nach dem Verpressen die Dichte der Holzwerkstoffplatte 2 in einer bis an die oberseitige und unterseitige Oberfläche der Holzwerkstoffplatte 2 reichenden Zone 2.11 höher als in dazu in Längsrichtung benachbarten zweiten Abschnitten 2.2 der Holzwerkstoffplatte 2 ist. Der zu einer Vollplatte verpresste Spänekuchen, der in Fig. 1a die Presseinrichtung 6 nach rechts hin verlässt, bildet in diesem Fall schon die Holzwerkstoffplatte 2, die anschließend mit den Decklagen 3 und 3' gesäumt wird. Alternativ ist es aber auch denkbar, dass der zu einer Vollplatte verpresste Spänekuchen, der die Presseinrichtung 6 verlässt, zunächst ein Zwischenprodukt 7 bildet, wie es beispielsweise in Fig. 2 dargestellt ist, wobei aus dem Zwischenprodukt 7 die Holzwerkstoffplatte 2 durch Abtrennen eines Teils des Zwischenprodukts 7 erhalten wird. Das Zwischenprodukt 7 wird also beispielsweise zersägt, um mehrere Holzwerkstoffplatten 2 zu erhalten.

Bei dem in Fig. 1a dargestellten Verfahren wird der jeweils höher verdichtete Abschnitt 2.1 dadurch erzeugt, dass der Spänekuchen 5 vor dem Verpressen in einem Bereich 5.1, der später den höher verdichteten Abschnitt 2.1 bildet, mit einer größeren Dicke geformt wird. Die größere Dicke wird gemäß Fig. 1a dadurch erreicht, dass in besagtem Bereich 5.1 des Spänekuchens 5 eine größere Menge an Holzpartikeln als in dazu benachbarten Bereichen 5.2 derselben Schicht 5a aufgestreut wird. In diesem Fall wird also nur eine Schicht Holzmaterial gestreut.

Fig. 1b zeigt dagegen ein Verfahren, welches sich von dem in Fig. 1a dargestellten Verfahren dadurch unterscheidet, dass hier ein Streuen mehrerer Schichten, nämlich von zwei Schichten, vorgesehen ist. Hier wird die größere Dicke des Spänekuchens 5 erreicht, indem die untere Schicht 5a aus Holzpartikeln, die zuerst gestreut wird, in dem Bereich 5.1, der später den höher verdichteten Abschnitt 2.1 bildet, mit einer zweiten Schicht 5b aus Holzpartikeln überstreut wird.

Sowohl im Falle der Fig. 1a als auch im Falle der Fig. 1b hat der zu einer Vollplatte verpresste Spänekuchen, in diesem Fall also die Holzwerkstoffplatte 2, über ihre gesamte Länge eine gleichbleibende Dicke.

Ein weiterer Unterschied zwischen den beiden Verfahren in den Fig. 1a und 1b ist, dass bei der Holzwerkstoffplatte 2 gemäß Fig. 1a im Abschnitt 2.1, der gegenüber den benachbarten Abschnitten 2.2 eine größere Dichte hat, die Dichte über die Plattendicke gleichmäßig ist. Dagegen nimmt die Dichte gemäß Fig. 1b bei der Holzwerkstoffplatte 2 von der Mittelebene E nach außen hin zu, wobei hier ein über die Plattendicke symmetrischer Dichteverlauf vorliegt.

Der Verlauf und die Form der höher verdichteten Abschnitte 2.1 kann unterschiedlich sein, wie die Fig. 2 bis 4 zeigen.

Bei der in Fig. 2 gezeigten, aus dem Zwischenprodukt 7 erhaltenen Holzwerkstoffplatte 2 sind vier erste Abschnitte 2.1 mit einer größeren Dichte als in einem dazu benachbarten Abschnitt 2.2 vorgesehen, die jeweils einen geraden streifenförmigen Verlauf haben und sich jeweils bis zur Stirnkante 2.3 der Holzwerkstoffplatte 2 erstrecken, die die äußere Begrenzung der Holzwerkstoffplatte 2 bildet. Dabei erstrecken sich die Abschnitte 2.1 jeweils über die gesamte Länge der jeweiligen Stirnkante 2.3 und berühren sich im Bereich der äußeren Plattenecken 2.4.

Bei dem in Fig. 2 dargestellten Ausführungsbeispiel hat die das Zwischenprodukt 7 bildende Vollplatte eine Breite von beispielsweise 2070 mm und eine Länge von beispielsweise 5060 mm. Im Bereich der Plattenränder sowie in Längs- und Querrichtung verlaufen je zwei streifenförmige Abschnitte höherer Dichte. Die aus einem solchen plattenförmigen Zwischenprodukt 7 bevorzugt erhaltenen Elemente haben beispielsweise eine Breite von 699 mm und eine Länge von 1876 mm.

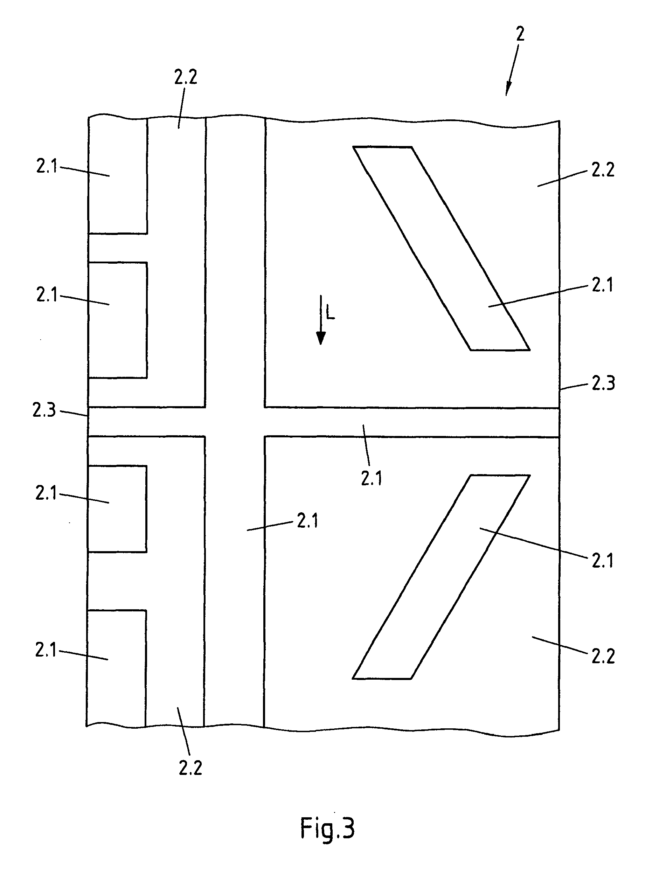

Fig. 3 zeigt noch andere Verläufe und Formen, die der erste Abschnitt 2.1 einnehmen kann. So kann der erste Abschnitt 2.1 parallel, quer oder winkelig zur Längsrichtung L der Holzwerkstoffplatte 2 verlaufen. Benachbart zum ersten Abschnitt 2.1 befindet sich jeweils mindestens ein Abschnitt 2.2, welcher gegenüber dem Abschnitt 2.1 eine verringerte Dichte aufweist.

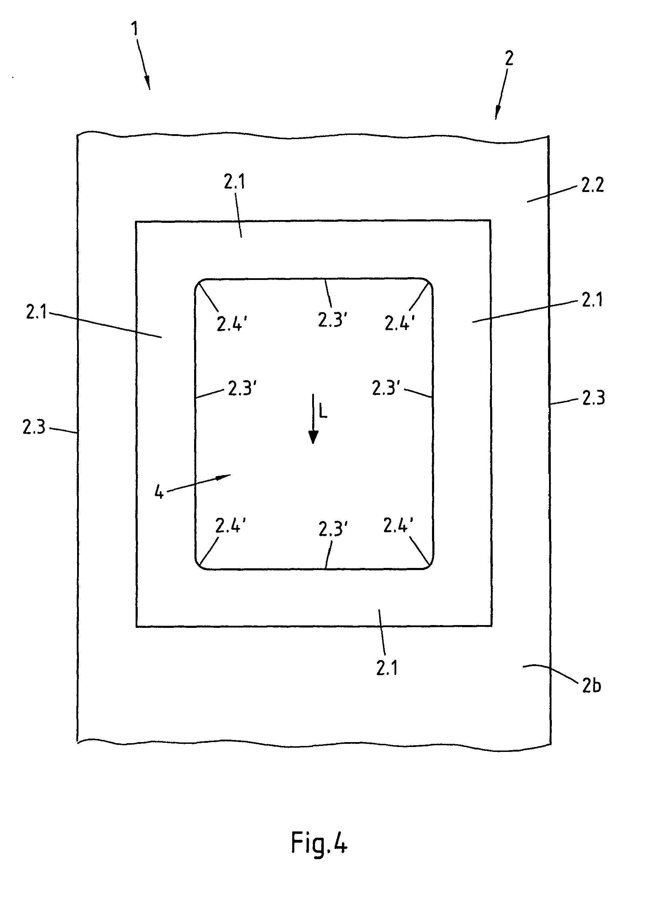

Fig. 4 zeigt eine Sandwichplatte 1, die eine Küchenarbeitsplatte bildet, von unten. Die Sandwichplatte 1 ist auf der nicht sichtbaren Oberseite mit einer Decklage, wie sie zuvor beschrieben wurde, versehen. An der dargestellten Unterseite 2b ist keine Decklage mit der Holzwerkstoffplatte 2 verbunden, so dass die die Küchenarbeitsplatte bildende Sandwichplatte 1 einen lediglich zweilagigen Aufbau hat.

In diesem Fall weist die Holzwerkstoffplatte 2 ebenfalls vier erste Abschnitte 2.1 mit einer erhöhten Dichte auf, die sich hier jeweils entlang der Stirnkante 2.3' erstrecken, die die äußere Begrenzung einer Aussparung 4 in der Holzwerkstoffplatte 2 bildet. Hier berühren sich die ersten Abschnitte 2.1 im Bereich der inneren Ecken 2.4' der Aussparung 4, so dass die Aussparung 4 vollständig von Abschnitten 2.1 einer erhöhten Dichte umgeben ist. In diesem Bereich kann dann auf optimale Weise ein Spülbecken montiert werden.

## Patentansprüche

1. Sandwichplatte (1) für ein Möbel,
- mit einer sich in eine Längsrichtung (L) ersteckenden ein- oder mehrschichtigen Holzwerkstoffplatte (2) aus mit einem Bindemittel versehenen und miteinander verpressten Holzpartikeln, die eine in Längsrichtung (L) verlaufende Oberseite (2a) und eine dazu parallele Unterseite (2b) aufweist, wobei der Abstand zwischen Oberseite (2a) und Unterseite (2b) eine Plattendicke definiert, und
- mit einer sich in Längsrichtung (L) erstreckenden ersten Decklage (3), mit der die Holzwerkstoffplatte (2) gesäumt ist, wobei die Decklage (3) mit der Oberseite (2a) der Holzwerkstoffplatte (2) verklebt ist und wobei die Decklage (3) eine Dicke hat, die kleiner als die Plattendicke der Holzwerkstoffplatte (2) ist,
wobei die Holzwerkstoffplatte (2) mindestens einen ersten Abschnitt (2.1) aufweist, in welchem die Dichte der Holzwerkstoffplatte (2) höher als in mindestens einem in Längsrichtung (L) dazu benachbarten zweiten Abschnitt (2.2) der Holzwerkstoffplatte (2) ist, **dadurch gekennzeichnet,**
- **dass** in dem mindestens einen ersten Abschnitt (2.1) höherer Dichte eine größere Menge an Holzpartikeln, eine andere Art von Holzpartikeln, ein anderes Material der Holzpartikel und/oder eine andere Größe der Holzpartikel als in dem dazu benachbarten zweiten Abschnitt (2.2) vorgesehen ist, und
- **dass** die erste Decklage (3) eine Dünnspanplatte mit einer maximalen Dicke von 8 mm, eine Dünn-MDF-Platte mit einer maximalen Dicke von 8 mm oder eine Sperrholzplatte ist.

2. Sandwichplatte (1) nach Anspruch 1, **dadurch gekennzeichnet, dass** in dem mindestens einen ersten Abschnitt (2.1) mit der höheren Dichte eine über die Plattendicke gleichmäßige Dichte der Holzwerkstoffplatte (2) oder eine über die Plattendicke variierende Dichte vorgesehen ist, wobei der Dichteverlauf im ersten Abschnitt (2.1) symmetrisch zu einer Mittelebene (E) ist, die in Längsrichtung (L) in der Mitte zwischen Oberseite (2a) und Unterseite (2b) der Holzwerkstoffplatte (2) verläuft.

3. Sandwichplatte (1) nach Anspruch 1 oder 2, **dadurch gekennzeichnet, dass** der mindestens eine erste Abschnitt (2.1) mit der höheren Dichte einen streifenförmigen Verlauf hat und sich insbesondere parallel, quer oder winkelig zur Längsrichtung (L) erstreckt.

4. Sandwichplatte (1) nach einem der vorangehenden Ansprüche, **dadurch gekennzeichnet, dass** in dem mindestens einen ersten Abschnitt (2.1) die Dichte der Holzwerkstoffplatte (2) in einer bis an die oberseitige und/oder unterseitige Oberfläche der Holzwerkstoffplatte (2) reichenden Zone (2.11) höher als in dem mindestens einen in Längsrichtung (L) dazu benachbarten zweiten Abschnitt (2.2) der Holzwerkstoffplatte (2) ist.

5. Sandwichplatte (1) nach einem der vorangehenden Ansprüche, **dadurch gekennzeichnet, dass** mehrere der ersten Abschnitte (2.1) mit der höheren Dichte einander berühren.

6. Sandwichplatte (1) nach einem der vorangehenden Ansprüche, **dadurch gekennzeichnet, dass** sich der mindestens eine erste Abschnitt (2.1) mit der höheren Dichte bis zu einer Stirnkante (2.3, 2.3') der Holzwerkstoffplatte (2) erstreckt, wobei die Stirnkante (2.3, 2.3') die äußere Begrenzung der Holzwerkstoffplatte (2) oder die äußere Begrenzung einer Aussparung (4) in der Holzwerkstoffplatte (2) bildet, wobei sich der mindestens eine erste Abschnitt (2.1) mit der höheren Dichte insbesondere über die gesamte Länge der Stirnkante (2.3, 2.3') erstreckt.

7. Sandwichplatte (1) nach Anspruch 6, **dadurch gekennzeichnet, dass** jede die äußere Begrenzung der Holzwerkstoffplatte (2) bildende Stirnkante (2.3) und/oder jede die äußere Begrenzung der Aussparung (4) bildende Stirnkante (2.3') an einen der ersten Abschnitte (2.1) mit der höheren Dichte angrenzt.

8. Sandwichplatte (1) nach einem der vorangehenden Ansprüche, **dadurch gekennzeichnet, dass** eine sich in Längsrichtung (L) erstreckende zweite Decklage (3') vorgesehen ist, die sich parallel zur ersten Decklage (3) erstreckt und die mit der Unterseite (2b) der Holzwerkstoffplatte (2) verklebt ist, wobei die zweite Decklage (3') insbesondere eine Dünnspanplatte, eine Dünn-MDF-Platte oder eine Sperrholzplatte ist.

9. Sandwichplatte (1) nach einem der vorangehenden Ansprüche, **dadurch gekennzeichnet, dass** die Holzwerkstoffplatte (2) eine Spanplatte oder eine Faserplatte ist.

10. Möbel mit einer Sandwichplatte (1) nach einem der vorangehenden Ansprüche.

11. Verfahren zur Herstellung einer eine ein- oder mehrschichtige Holzwerkstoffplatte (2) und mindestens eine damit verbundene Decklage (3,3') aufweisenden Sandwichplatte (1) für ein Möbel, insbesondere einer Sandwichplatte (1) nach einem der Ansprüche 1 bis 9, bei dem eine sich in eine Längsrichtung (L) erstreckende Holzwerkstoffplatte (2) hergestellt wird, indem Holzpartikel mit einem Bindemittel versehen und zu einem ein- oder mehrschichtigen Spänekuchen (5) gestreut werden, der unter erhöhtem Druck und erhöhter Temperatur in einer Presseinrichtung (6) verpresst wird, wobei die Holzwerkstoffplatte (2) durch das Verpressen eine in Längsrichtung (L) verlaufende Oberseite (2a) und eine dazu parallele Unterseite (2b) erhält, wobei der Abstand zwischen Oberseite (2a) und Unterseite (2b) eine Plattendicke definiert, wobei bei der Herstellung der Holzwerkstoffplatte (2) mindestens ein erster Abschnitt (2.1) erzeugt wird, in welchem nach dem Verpressen die Dichte der Holzwerkstoffplatte (2) höher als in mindestens einem in Längsrichtung (L) dazu benachbarten zweiten Abschnitt (2.2) der Holzwerkstoffplatte (2) ist, wobei die Holzwerkstoffplatte (2) mit der mindestens einen Decklage (3,3') gesäumt wird, **dadurch gekennzeichnet,**
- **dass** der mindestens eine erste Abschnitt (2.1) mit der höheren Dichte erzeugt wird, indem der Spänekuchen (5) vor dem Verpressen in dem Bereich (5.1), der später den mindestens einen ersten Abschnitt (2.1) bildet, mit einer größeren Dicke geformt wird und/oder indem vor dem Verpressen in dem Bereich (5.1) eine größere Menge Bindemittel pro Kilogramm Holzpartikel, ein anderes Bindemittel, eine andere Art von Holzpartikeln, ein anderes Material der Holzpartikel und/oder eine andere Größe der Holzpartikel als in mindestens einem benachbarten Bereich verwendet wird, und
- **dass** die mindestens eine mit der Holzwerkstoffplatte (2) verbundene Decklage (3,3') eine Dünnspanplatte mit einer maximalen Dicke von 8 mm, eine Dünn-MDF-Platte mit einer maximalen Dicke von 8 mm oder eine Sperrholzplatte ist.

12. Verfahren nach Anspruch 11, **dadurch gekennzeichnet, dass** der mindestens eine erste Abschnitt (2.1) derart erzeugt wird, dass die Dichte der Holzwerkstoffplatte (2) in einer bis an die oberseitige und/oder unterseitige Oberfläche der Holzwerkstoffplatte (2) reichenden Zone (2.11) höher als in dem mindestens einen in Längsrichtung (L) dazu benachbarten zweiten Abschnitt (2.2) der Holzwerkstoffplatte (2) ist.

13. Verfahren nach Anspruch 11 oder 12, **dadurch gekennzeichnet, dass** die größere Dicke des Spänekuchens (5) erreicht wird, indem eine erste Schicht (5a) aus Holzpartikeln in dem Bereich (5.1), der später den mindestens einen ersten Abschnitt (2.1) bildet, mit einer zweiten Schicht (5b) aus Holzpartikeln überstreut wird, oder indem in dem Bereich (5.1), der später den mindestens einen ersten Abschnitt (2.1) bildet, eine größere Menge an Holzpartikeln als in mindestens einem dazu benachbarten Bereich (5.2) derselben Schicht (5a) ausgestreut wird.

14. Verfahren nach einem der Ansprüche 11 bis 13, **dadurch gekennzeichnet, dass** durch das Verpressen des Spänekuchens (5) ein plattenförmiges Zwischenprodukt (7) erzeugt wird, aus dem die Holzwerkstoffplatte (2) durch Abtrennen eines Teils (7.1) erhalten wird.

15. Verfahren nach einem der Ansprüche 11 bis 14, **dadurch gekennzeichnet, dass** eine sich in Längsrichtung (L) erstreckende Decklage (3, 3') mit der Oberseite und/oder Unterseite des verpressten Spänekuchens oder der Oberseite (2a) und/oder Unterseite (2b) der Holzwerkstoffplatte (2) verklebt wird, wobei die Decklage (3, 3') eine Dicke hat, die kleiner als die Plattendicke der Holzwerkstoffplatte (2) ist.

16. Verfahren nach einem der Ansprüche 11 bis 15, **dadurch gekennzeichnet, dass** die mindestens eine mit der Holzwerkstoffplatte (2) verbundene Decklage (3, 3') mit einer Beschichtung versehen wird, wobei die Beschichtung insbesondere vor dem Verkleben oder nach dem Verkleben der jeweiligen Decklage (3, 3') mit der Holwerkstoffplatte (2) erfolgt.

## Claims

1. A sandwich panel (1) for a piece of furniture,
- having a single- or multi-layered wood-based material panel (2), which extends in a longitudinal direction (L), consists of wood particles, which are provided with a binder and compressed with each other, and has an upper side (2a), which runs in the longitudinal direction (L), and an underside (2b) parallel to said upper side, the distance between the upper side (2a) and the underside (2b) defining a panel thickness, and
- having a first covering layer (3), which extends in the longitudinal direction (L) and with which the wood-based material panel (2) is faced, the covering layer (3) being adhesively bonded to the upper side (2a) of the wood-based material panel (2) and the covering layer (3) having a thickness that is smaller than the panel thickness of the wood-based material panel (2),
the wood-based material panel (2) having at least one first section (2.1), in which the density of the wood-based material panel (2) is greater than in at least one second section (2.2) of the wood-based material panel (2), said second section being adjacent to said first section in the longitudinal direction (L), **characterised in that**
- a larger amount of wood particles, a different type of wood particles, a different material of the wood particles and/or a different size of the wood particles is provided in the at least one first section (2.1) of higher density than in the second section (2.2) adjacent thereto, and
- the first covering layer (3) is a thin chipboard having a maximum thickness of 8 mm, a thin MDF board having a maximum thickness of 8 mm or a plywood board.

2. The sandwich panel (1) according to Claim 1, **characterised in that** a density of the wood-based material panel (2) that is uniform over the panel thickness or a density that varies over the panel thickness is provided in the at least one first section (2.1) with the higher density, wherein the density profile in the first section (2.1) is symmetrical to a centre plane (E), which runs in the longitudinal direction (L) in the centre between the upper side (2a) and the underside (2b) of the wood-based material panel (2).

3. The sandwich panel (1) according to Claim 1 or 2, **characterised in that** the at least one first section (2.1) with the higher density has a strip-shaped course and extends in particular parallel, transversely or at an angle to the longitudinal direction (L).

4. The sandwich panel (1) according to any one of the preceding claims, **characterised in that** the density of the wood-based material panel (2) is higher in a zone (2.11) that extends as far as the upper-side and/or underside surface of the wood-based material panel (2) in the at least one first section (2.1) than in the at least one second section (2.2) of the wood-based material panel (2), said second section being adjacent to said first section in the longitudinal direction (L).

5. The sandwich panel (1) according to any one of the preceding claims, **characterised in that** a plurality of the first sections (2.1) with the higher density touch each other.

6. The sandwich panel (1) according to any one of the preceding claims, **characterised in that** the at least one first section (2.1) with the higher density extends as far as an end edge (2.3, 2.3') of the wood-based material panel (2), wherein the end edge (2.3, 2.3') forms the outer boundary of the wood-based material panel (2) or the outer boundary of a cut-out (4) in the wood-based material panel (2), wherein the at least one first section (2.1) with the higher density extends in particular over the entire length of the end edge (2.3, 2.3').

7. The sandwich panel (1) according to Claim 6, **characterised in that** each end edge (2.3) that forms the outer boundary of the wood-based material panel (2) and/or each end edge (2.3') that forms the outer boundary of the cut-out (4) adjoins one of the first sections (2.1) with the higher density.

8. The sandwich panel (1) according to any one of the preceding claims, **characterised in that** a second covering layer (3') is provided, which extends in the longitudinal direction (L), extends parallel to the first covering layer (3) and is adhesively bonded to the underside (2b) of the wood-based material panel (2), wherein the second covering layer (3') is in particular a thin chipboard, a thin MDF board or a plywood board.

9. The sandwich panel (1) according to any one of the preceding claims, **characterised in that** the wood-based material panel (2) is a chipboard or a fibreboard.

10. A piece of furniture having a sandwich panel (1) according to any one of the preceding claims.

11. A method for producing a sandwich panel (1) having a single- or multi-layered wood-based material panel (2) and at least one covering layer (3, 3') connected thereto for a piece of furniture, in particular a sandwich panel (1) according to any one of Claims 1 to 9, in which a wood-based material panel (2), which extends in a longitudinal direction (L), is produced by providing wood particles with a binder and scattering them to form a single- or multi-layered chip cake (5), which is compressed under elevated pressure and elevated temperature in a press apparatus (6), the wood-based material panel (2) receiving as a result of the compression an upper side (2a), which runs in the longitudinal direction (L), and an underside (2b), which is parallel to said upper side, the distance between the upper side (2a) and the underside (2b) defining a panel thickness, at least one first section (2.1) being created during production of the wood-based material panel (2), in which section the density of the wood-based material panel (2) is higher after compression than in at least one second section (2.2) of the wood-based material panel (2), said second section being adjacent to said first section in the longitudinal direction (L), the wood-based material panel (2) being faced with the at least one covering layer (3, 3'), **characterised in that**
- the at least one first section (2.1) is created with the higher density by forming the chip cake (5) before compression with a greater thickness in the region (5.1) that subsequently forms the at least one first section (2.1) and/or by using in said region (5.1) before compression a larger amount of binder per kilogramme of wood particles, a different binder, a different type of wood particles, a different material of the wood particles and/or a different size of the wood particles than in at least one adjacent region, and
- the at least one covering layer (3, 3') that is connected to the wood-based material panel (2) is a thin chipboard having a maximum thickness of 8 mm, a thin MDF board having a maximum thickness of 8 mm or a plywood board.

12. The method according to Claim 11, **characterised in that** the at least one first section (2.1) is created in such a manner that the density of the wood-based material panel (2) is higher in a zone (2.11) that extends as far as the upper-side and/or underside surface of the wood-based material panel (2) than in the at least one second section (2.2) of the wood-based material panel (2), said second section being adjacent to said first section in the longitudinal direction (L).

13. The method according to Claim 11 or 12, **characterised in that** the greater thickness of the chip cake (5) is achieved by scattering a second layer (5b) of wood particles over a first layer (5a) of wood particles in the region (5.1) that subsequently forms the at least one first section (2.1), or by scattering a larger amount of wood particles in the region (5.1) that subsequently forms the at least one first section (2.1) than in at least one region (5.2) of the same layer (5a) that is adjacent to said region.

14. The method according to any one of Claims 11 to 13, **characterised in that** the compression of the chip cake (5) produces a panel-shaped intermediate product (7), from which the wood-based material panel (2) is obtained by cutting off a part (7.1).

15. The method according to any one of Claims 11 to 14, **characterised in that** a covering layer (3, 3'), which extends in the longitudinal direction (L), is adhesively bonded to the upper side and/or underside of the compressed chip cake or to the upper side (2a) and/or underside (2b) of the wood-based material panel (2), wherein the covering layer (3, 3') has a thickness that is smaller than the panel thickness of the wood-based material panel (2).

16. The method according to any one of Claims 11 to 15, **characterised in that** the at least one covering layer (3, 3') that is connected to the wood-based material panel (2) is provided with a coating, wherein the coating is applied in particular before or after the respective covering layer (3, 3') is adhesively bonded to the wood-based material panel (2).

## Revendications

1. Panneau sandwich (1) pour un meuble,
- avec un produit dérivé du bois en forme de plaque (2) à une ou plusieurs couches, s'étendant dans un sens longitudinal (L), constitué de particules de bois pourvues d'un liant et pressées ensemble, présentant une face supérieure (2a) s'étendant dans le sens longitudinal (L) et une face inférieure (2b) parallèle à celle-ci, l'espacement entre la face supérieure (2a) et la face inférieure (2b) définissant une épaisseur de panneau, et
- avec une première couche de couverture (3) s'étendant dans le sens longitudinal (L) et recouvrant le produit dérivé du bois en forme de plaque (2), la couche de couverture (3) étant collée sur la face supérieure (2a) du produit dérivé du bois en forme de plaque (2), et la couche de couverture (3) présentant une épaisseur inférieure à l'épaisseur de panneau du produit dérivé du bois en forme de plaque (2),
dans laquelle le produit dérivé du bois en forme de plaque (2) comporte au moins une première section (2.1) dans laquelle la densité du produit dérivé du bois en forme de plaque (2) est plus élevée que dans au moins une deuxième section (2.2) du produit dérivé du bois en forme de plaque (2) adjacente à celle-ci dans le sens longitudinal (L), **caractérisé en ce que**
- dans l'au moins une première section (2.1) à densité plus élevée, il est prévu une plus grande quantité de particules de bois, une autre sorte de particules de bois, un autre matériau de particules de bois et/ou une autre taille de particules de bois que dans la deuxième section (2.2) voisine, et
- **en ce que** la première couche de couverture (3) est un panneau de particules mince avec une épaisseur maximale de 8 mm, un panneau MDF mince avec une épaisseur maximale de 8 mm ou un panneau en contreplaqué.

2. Panneau sandwich (1) selon la revendication 1, **caractérisé en ce que** dans l'au moins une première section (2.1) avec la densité plus élevée, il est prévu une densité homogène du produit dérivé du bois en forme de plaque (2) sur l'épaisseur de panneau ou une densité variable sur l'épaisseur de panneau, dans lequel l'évolution de la densité dans la première section (2.1) est symétrique à un plan médian (E) s'étendant dans le sens longitudinal (L) au milieu entre la face supérieure (2a) et la face inférieure (2b) du produit dérivé du bois en forme de plaque (2).

3. Panneau sandwich (1) selon la revendication 1 ou 2, **caractérisé en ce que** l'au moins une première section (2.1) avec la densité plus élevée présente une évolution en forme de bande et s'étend en particulier parallèlement, transversalement ou de façon angulaire par rapport au sens longitudinal (L).

4. Panneau sandwich (1) selon l'une des revendications précédentes, **caractérisé en ce que** dans l'au moins une première section (2.1), la densité du produit dérivé du bois en forme de plaque (2) dans une zone (2.11) allant jusqu'à la surface supérieure et/ou inférieure du produit dérivé du bois en forme de plaque (2) est plus élevée que dans l'au moins une deuxième section (2.2) du produit dérivé du bois en forme de plaque (2) adjacente à celle-ci dans le sens longitudinal (L).

5. Panneau sandwich (1) selon l'une des revendications précédentes, **caractérisé en ce que** plusieurs des premières sections (2.1) avec la densité plus élevée se touchent les unes les autres.

6. Panneau sandwich (1) selon l'une des revendications précédentes, **caractérisé en ce que** l'au moins une première section (2.1) avec la densité plus élevée s'étend jusqu'à un bord frontal (2.3, 2.3') du produit dérivé du bois en forme de plaque (2), le bord frontal (2.3, 2.3') forme la limite extérieure du produit dérivé du bois en forme de plaque (2) ou la limite extérieure d'un évidement (4) dans le produit dérivé du bois en forme de plaque (2), l'au moins une première section (2.1) avec la densité plus élevée s'étendant en particulier sur toute la longueur du bord frontal (2.3, 2.3').

7. Panneau sandwich (1) selon la revendication 6, **caractérisé en ce que** chaque bord frontal (2.3) formant la limite extérieure du produit dérivé du bois en forme de plaque (2) et/ou chaque bord frontal (2.3') formant la limite extérieure de l'évidement (4) est adjacent à l'une des premières sections (2.1) avec la densité plus élevée.

8. Panneau sandwich (1) selon l'une des revendications précédentes, **caractérisé en ce qu'**il est prévu une deuxième couche de couverture (3') s'étendant dans le sens longitudinal (L), laquelle s'étend parallèlement à la première couche de couverture (3) et est collée sur la face inférieure (2b) du produit dérivé du bois en forme de plaque (2), la deuxième couche de couverture (3') étant en particulier un panneau de particules mince, un panneau MDF mince ou un panneau en contreplaqué.

9. Panneau sandwich (1) selon l'une des revendications précédentes, **caractérisé en ce que** le produit dérivé du bois en forme de plaque (2) est un panneau de copeaux ou un panneau de fibres.

10. Meuble avec un panneau sandwich (1) selon l'une des revendications précédentes.

11. Procédé pour la fabrication d'un panneau sandwich (1) comportant un produit dérivé du bois en forme de plaque (2) à une ou plusieurs couches et au moins une couche de couverture (3, 3') reliée à celui-ci, pour un meuble, en particulier d'un panneau sandwich (1) selon l'une des revendications 1 à 9, dans lequel un produit dérivé du bois en forme de plaque (2) s'étendant dans le sens longitudinal (L) est fabriqué en dotant des particules de bois avec un liant et en les dispersant en un gâteau de copeaux (5) à une ou plusieurs couches, lequel est pressé dans un dispositif de pressage (6) avec une pression élevée et une température élevée, dans lequel le produit dérivé du bois en forme de plaque (2) obtient, de par le pressage, une face supérieure (2a) s'étendant dans le sens longitudinal (L) et une face inférieure (2b) parallèle à celle-ci, dans lequel l'espacement entre la face supérieure (2a) et la face inférieure (2b) définit une épaisseur de panneau, dans lequel au moins une première section (2.1) est réalisée au cours de la fabrication du produit dérivé du bois en forme de plaque (2), dans laquelle la densité du produit dérivé du bois en forme de plaque (2) suite au pressage sera plus élevée que dans au moins une deuxième section (2.2) du produit dérivé du bois en forme de plaque (2) adjacente à celle-ci dans le sens longitudinal (L), dans lequel le produit dérivé du bois en forme de plaque (2) est recouvré par l'au moins une couche de couverture (3, 3'), **caractérisé en ce que**
- l'au moins une première section (2.1) avec la densité plus élevée est fabriqué en formant le gâteau de copeaux (5) avec une épaisseur supérieure dans la région (5.1) formant par la suite l'au moins une première section (2.1), avant le pressage, et/ou en utilisant une plus grande quantité de liant par kilogramme de particules de bois, un autre liant, une autre sorte de particules de bois, un autre matériau de particules de bois et/ou une autre taille de particules de bois dans la région (5.1) que dans au moins une région voisine, avant le pressage, et
- **en ce que** l'au moins une couche de couverture (3, 3') reliée au produit dérivé du bois en forme de plaque (2) est un panneau de particules mince avec une épaisseur maximale de 8 mm, un panneau MDF mince avec une épaisseur maximale de 8 mm ou un panneau en contreplaqué.

12. Procédé selon la revendication 11, **caractérisé en ce que** l'au moins une première section (2.1) est réalisée de manière à ce que la densité du produit dérivé du bois en forme de plaque (2) dans une zone (2.11) allant jusqu'à la surface supérieure et/ou inférieure du produit dérivé du bois en forme de plaque (2) est plus élevée que dans l'au moins une deuxième section (2.2) du produit dérivé du bois en forme de plaque (2) adjacente à celle-ci dans le sens longitudinal (L).

13. Procédé selon la revendication 11 ou 12, **caractérisé en ce que** l'épaisseur supérieure du gâteau de copeaux (5) est obtenue en dispersant une deuxième couche (5b) de particules de bois sur une première couche (5a) de particules de bois, dans la région (5.1) destinée à former par la suite l'au moins une première section (2.1), ou en dispersant une plus grande quantité de particules de bois dans la région (5.1) destinée à former par la suite l'au moins une première section (2.1) que dans au moins une région (5.2) de la même couche (5a), adjacente à celle-ci.

14. Procédé selon l'une des revendications 11 à 13, **caractérisé en ce que** le pressage du gâteau de copeaux (5) permet de fabriquer un produit intermédiaire en forme de panneau (7), à partir duquel est obtenu le produit dérivé du bois en forme de plaque (2), par détachement d'une partie (7.1).

15. Procédé selon l'une des revendications 11 à 14, **caractérisé en ce qu'**une couche de couverture (3, 3') s'étendant dans le sens longitudinal (L) est collée sur la face supérieure et/ou la face inférieure du gâteau de copeaux pressé ou sur la face supérieure (2a) et/ou la face inférieure (2b) du produit dérivé du bois en forme de plaque (2), dans lequel la couche de couverture (3, 3') présente une épaisseur inférieure à l'épaisseur de panneau du produit dérivé du bois en forme de plaque (2).

16. Procédé selon l'une des revendications 11 à 15, **caractérisé en ce que** l'au moins une couche de couverture (3, 3') reliée au produit dérivé du bois en forme de plaque (2) est pourvue d'un revêtement, dans lequel le revêtement est appliqué en particulier avant le collage ou après le collage de la couche de couverture (3, 3') respective sur le produit dérivé du bois en forme de plaque (2).
